# EUROPEAN PATENT SPECIFICATION

(11) **EP 1 176 292 B1**
(45) Date of publication and mention of the grant of the patent: **13.09.2006**
(21) Application number: 01117847.2
(22) Date of filing: 23.07.2001
(51) Int. Cl.: F01N 3/20, F01N 3/08, F02M 25/07, F01N 11/00

(54) **Exhaust gas purifying apparatus of internal combustion engine**
Vorrichtung zur Abgasreinigung für eine Brennkraftmaschine
Dispositif de purification de gaz d'échappement pour un moteur à combustion interne

(30) Priority: 24.07.2000 JP 2000223049; 25.10.2000 JP 2000325623; 18.01.2001 JP 2001010663
(43) Date of publication of application: 30.01.2002
(73) Proprietor: Toyota Jidosha Kabushiki Kaisha, Toyota-shi, Aichi-ken, 471-8571 (JP)
(72) Inventor: Kobayashi, Masaaki, Toyota-shi, Aichi-ken, 471-8571 (JP); Matsuoka, Hiroki, Toyota-shi, Aichi-ken, 471-8571 (JP); Oda, Tomihisa, Toyota-shi, Aichi-ken, 471-8571 (JP); Harada, Yasuo, Toyota-shi, Aichi-ken, 471-8571 (JP); Aoyama,Taro, Toyota-shi, Aichi-ken, 471-8571 (JP); Matsushita, Souichi, Toyota-shi, Aichi-ken, 471-8571 (JP); Ohki, Hisashi, Toyota-shi, Aichi-ken, 471-8571 (JP); Hayashi, Kotaro, Toyota-shi, Aichi-ken, 471-8571 (JP); Ishiyama, Shinobu, Toyota-shi, Aichi-ken, 471-8571 (JP); Shibata, Daisuke, Toyota-shi, Aichi-ken, 471-8571 (JP); Magarida, Naofumi, Toyota-shi, Aichi-ken, 471-8571 (JP); Negami, Akihiko, Toyota-shi, Aichi-ken, 471-8571 (JP); Ohtsubo, Yasuhiko, Toyota-shi, Aichi-ken, 471-8571 (JP); Tahara, Jun, Toyota-shi, Aichi-ken, 471-8571 (JP)
(74) Representative: TBK-Patent

(56) References cited:
- DE-A- 19 914 787
- US-A- 5 367 875
- PATENT ABSTRACTS OF JAPAN vol. 1999, no. 09, 30 July 1999 (1999-07-30) & JP 11 093641 A (TOYOTA MOTOR CORP), 6 April 1999 (1999-04-06)

## Description

### Background of the Invention

The present invention relates to an exhaust gas purifying apparatus for purifying nitrogen oxides (NOx) included in exhaust gas by an exhaust gas purifying catalyst arranged on an exhaust passage of an internal combustion engine.

In recent years, with regard to an internal combustion engine mounted on an automobile, particularly an internal combustion engine operated in a mixture in an oxygen excess state (so-called mixture of lean air / fuel ratio) as in a diesel engine or a lean burn type gasoline engine, there have been proposed various technologies in order to reduce an amount of nitrogen oxides (NOx) in exhaust gas.

As one of the technologies, there is known a technology of arranging a lean NOx catalyst such as a selective reduction NOx catalyst or storage-reduction NOx catalyst at an exhaust passage of an internal combustion engine.

The selective reduction NOx catalyst is a catalyst for reducing or decomposing nitrogen oxides (NOx) when hydrocarbons (HC) are present in an oxygen excessive atmosphere.

When nitrogen oxides (NOx) are purified by utilizing the selective reduction NOx catalyst, it is necessary to supply a pertinent amount of a reducing-agent such as hydrocarbons (HC) to the selective reduction NOx catalyst, however, when an internal combustion engine is operated in a lean air/fuel ratio, an amount of hydrocarbons (HC) in exhaust gas becomes extremely small and therefore, in order to purify nitrogen oxides (NOx) in exhaust gas when the internal combustion engine is operated in the lean air/fuel ratio, it is necessary to separately supply the reducing-agent such as hydrocarbons (HC) to the selective reduction NOx catalyst.

Meanwhile, the storage-reduction NOx catalyst is a catalyst storing nitrogen oxides (NOx) in exhaust gas when an air/fuel ratio of exhaust gas flowing to the storage-reduction NOx catalyst is the lean air/fuel ratio and discharging and reducing the stored nitrogen oxides (NOx) when an oxygen concentration of exhaust gas flowing to the storage-reduction NOx catalyst is reduced and a reducing-agent is present.

There is a limit in an amount of nitrogen oxides (NOx) which can be stored by the storage-reduction NOx catalyst and therefore, when the internal combustion engine is operated for a long period of time in the lean air/fuel ratio, a NOx storage ability of the storage-reduction NOx catalyst is saturated and nitrogen oxides (NOx) included in exhaust gas is emitted to the atmosphere without being purified. Therefore, when nitrogen oxides (NOx) are purified by using the storage-reduction NOx catalyst, before the NOx storage ability of the storage-reduction NOx catalyst is saturated, it is necessary to constitute the air/fuel ratio of exhaust gas flowing to the storage-reduction NOx catalyst by a rich air/fuel ratio to thereby reduce the oxygen concentration in exhaust gas and increase the amount of hydrocarbons (HC) included in exhaust gas.

As a specific technology of purifying nitrogen oxides (NOx) in exhaust gas by using the above-described lean NOx catalyst, for example, there is proposed "Exhaust gas purifying apparatus of internal combustion engine" disclosed in Japanese Patent Laid-Open No. Hei 11-93641. Further, US-A-5,367,875 discloses an exhaust gas purifying apparatus of an internal combustion engine as set forth in the preamble of claim 1.

According to the exhaust gas purifying apparatus of an internal combustion engine disclosed in Japanese Patent Laid-OpenNo. Hei 11-93641, there are provided an exhaust passage branched to a first exhaust passage and a second exhaust passage at its midway, a first catalytic converter provided at the first exhaust passage for containing an storage-reduction NOx catalyst, a second catalytic converter provided at the second exhaust passage for containing a selective reduction NOx catalyst, a switch valve provided at a branch portion of a first exhaust pipe and a second exhaust pipe for shutting off the first exhaust passage when temperature of exhaust gas is changed from high temperature to low temperature and shutting off the second exhaust passage when the temperature of exhaust gas is changed from low temperature to high temperature and a reducing-agent supplying means for supplying reducing-agent to the first catalytic converter.

According to the exhaust gas purifying apparatus of an internal combustion engine, when a NOx purifying rate of the selective reduction NOx catalyst becomes higher than that of the storage-reduction NOx catalyst as in changing the temperature of exhaust gas from high temperature to low temperature, the switch valve is controlled such that the exhaust gas flows in the second exhaust gas passage and the internal combustion engine is controlled to carry out fuel injection secondarily in an expansion stroke or in an exhaust stroke and when the NOx purifying rate of the storage-reduction NOx catalyst becomes higher than that of the selective reduction NOx catalyst as in changing the temperature of exhaust gas from high temperature to low temperature, the switch valve is controlled such that the exhaust gas flows in the first exhaust gas passage, the reducing-agent adding means is controlled such that the reducing-agent is added to the storage-reduction NOx catalyst, thereby, the selective reduction NOx catalyst and the storage-reduction NOx catalyst are separately used in accordance with characteristics of the respective to thereby promote the purifying rate of nitrogen oxides (NOx).

Further, according to the above-described publication, as the reducing-agent supplying means, there is disclosed a mechanism having an injection nozzle attached to the first catalytic converter, a reducing-agent pipe for conducting a portion of fuel to the injection nozzle from an accumulating chamber for accumulating fuel discharged from a fuel pump and distributing the fuel to fuel injection valves and a reducing-agent valve provided at a midway of the reducing-agent pipe for regulating a flow rate of fuel flowing in the reducing-agent pipe.

Meanwhile, according to the conventional technology disclosed in Japanese Patent Laid-Open No. Hei 11-93641, it is also important to detect leakage of fuel in the mechanism of supplying reducing-agent to the lean NOx catalyst.

For example, when fuel is leaked from the reducing-agent supplying mechanism to an exhaust pipe, there is supposed a case in which an excess amount of fuel is supplied to the lean NOx catalyst and the excess amount of fuel is burnt at the lean NOx catalyst, or a portion of fuel is emitted to the atmosphere without being purified by the lean NOx catalyst, as a result, there is a concern for deterioration or damage the lean NOx catalyst by overheating, or deteriorating exhaust gas.

Further, when fuel is leaked from the reducing-agent supplying mechanism to other than the exhaust pipe, it becomes difficult to supply a desired amount of fuel to the lean NOx catalyst and there is a concern of reducing the purifying rate of nitrogen oxides (NOx) at the lean NOx catalyst to thereby deteriorate exhaust gas emission.

The present invention has been carried out in view of the above-described various situations and it is an object thereof to prevent deterioration or damage of the lean NOx catalyst, or deterioration of the exhaust gas caused by leakage of reducing-agent by providing a technology capable of detecting leakage of the reducing-agent at a reducing-agent supplying apparatus for supplying the reducing-agent to the lean NOx catalyst provided at an exhaust passage of an internal combustion engine.

Further, according to Japanese Patent Laid-Open No. Hei 11-93641, when the amount of the reducing-agent supplied from the reducing-agent supplying mechanism to the exhaust pipe becomes deficient by abnormality of the reducing-agent supplying mechanism, there also is a concern that nitrogen oxides (NOx) in exhaust gas cannot be purified at the lean NOx catalyst and nitrogen oxides (NOx) in exhaust gas are emitted to the atmosphere without being purified.

Hence, in view of the above-described, it is another object of the present invention to detect abnormality of a reducing-agent supplying mechanism to thereby contribute to restraining a deterioration of the exhaust gas or a deterioration in an exhaust gas purifying catalyst caused by the abnormality of the reducing-agent supplying mechanism.

Meanwhile, when the above-described conventional reducing-agent supplying mechanism is controlled to inject the reducing-agent, there is conceivable a method of detecting the abnormality of the reducing-agent supplying mechanism by monitoring an air/fuel ratio of exhaust gas actually flowing to the lean NOx catalyst or actually flowing from the lean NOx catalyst. That is, when the reducing-agent supplying mechanism is controlled to supply the reducing-agent to the lean NOx catalyst, there is conceivable a method of determining the reducing-agent supplying mechanism as normal when the air/fuel ratio of exhaust gas is changed in accordance with supply of the reducing-agent and determining the reducing-agent supplying mechanism as abnormal when the air/fuel ratio of exhaust gas is not changed in accordance with supply of the reducing-agent.

However, according to the above-described method, although occurrence of abnormality at the reducing-agent supplying mechanism can be detected, it is difficult to specify a location of occurrence of abnormality of the reducing-agent supplying mechanism.

It is other object of the present invention to provide a technology in which in an exhaust gas purifying apparatus of an internal combustion engine utilizing a reducing-agent supplying mechanism having a reducing-agent injection nozzle arranged at an exhaust passage upstream from an exhaust gas purifying catalyst, a reducing-agent supplying passage for conducting a portion of fuel of the internal combustion engine to the reducing-agent injection nozzle, an amount controlling valve provided at a midway of the reducing-agent supplying passage for controlling an amount of a reducing-agent injected from the reducing-agent injection nozzle and a shut-off valve installed upstream from the amount controlling valve in the reducing-agent supplying passage for shutting off the reducing-agent supplying passage, abnormality of the reducing-agent supplying mechanism, particularly, abnormality of the reducing-agent adding unit, abnormality of the amount controlling valve or abnormality of the shut-off valve can be determined.

### Summary of the Invention

The present invention adopts followings means in order to resolve the above-described problem.

That is, according to an aspect of the present invention, there is provided an exhaust gas purifying apparatus of an internal combustion engine comprising the features of claim 1.

According to the exhaust gas purifying apparatus of an internal combustion engine constituted in this way, when the reducing-agent is supplied to the exhaust gas purifying catalyst, the reducing-agent supplying mechanism supplies the reducing-agent to the exhaust passage upstream from the exhaust gas purifying catalyst.

The reducing-agent supplied to the exhaust gas flows into the exhaust gas purifying catalyst along with exhaust gas flowing from the upstream side of the exhaust passage. Thereby, the exhaust gas purifying catalyst reduces and purify the harmful gas components in the exhaust gas by utilizing the reducing-agent.

Meanwhile, pressure detecting means detects the pressure of the reducing-agent in the reducing-agent supplying mechanism. At this occasion, when the reducing-agent is leaked in the reducing-agent supplying mechanism, the pressure detected by the pressure detecting means becomes a value different from the pressure when the reducing-agent is not leaked in the reducing-agent supplying mechanism.

Therefore, the abnormality determining means can determine the abnormality of the reducing-agent supplying mechanism on the basis of the pressure detected by the pressure detecting means.

In this case, when a passage from the shut-off unit to the reducing-agent adding unit in the reducing-agent supplying mechanism is closed, in other words, when a closed space is formed in a reducing-agent supplying mechanism, the abnormality determining means determines abnormality of the reducing-agent supplying mechanism on the basis of the pressure of the closed space.

For example, when the reducing-agent is leaked from inside of the closed space to outside, the pressure in the closed space is lowered, when the reducing-agent is leaked from outside of the closed space into the closed space, that is, when leakage of the reducing-agent is caused in the shut-off unit, the pressure in the closed space is elevated.

Therefore, the abnormality determining means can determine leakage of the reducing-agent in the reducing-agent supplying mechanism by lowering or elevating the pressure in the closed space.

However, the pressure of the reducing-agent is changed by factors of temperature and so on. Accordingly, when the amount of change of the pressure of the closed space exceeds a predetermined amount, the abnormality determining means may determine that the reducing-agent supplying mechanism is abnormal.

Further, there may be constructed a constitution in which when operation of the internal combustion engine is stopped, the shut-off unit shuts off flow of the reducing-agent from the reducing-agent discharging unit to the reducing-agent supplying passage to thereby form a closed space, the pressure detecting means detects that the pressure of the closed space when operation of the internal combustion is stopped and detects again the pressure of the closed space when the internal combustion engine is started again, the abnormality determining means calculates an amount of change of the pressure of the closed space during a period from when the operation of the internal combustion engine has been stopped until the internal combustion engine is started again and determines that the reducing-agent supplying mechanism is abnormal when the pressure change amount exceeds a predetermined amount.

In this case, leakage of the reducing-agent is determined on the basis of the change of the pressure of the closed space during the comparatively long period from when operation of the internal combustion engine has been stopped until the internal combustion engine is started again and therefore, leakage of a small amount of the reducing-agent becomes easy to detect.

Further, even when leakage of the reducing-agent is not caused in the reducing-agent supplying mechanism, the pressure is changed by temperature of the reducing-agent and accordingly, for example, the abnormality determining means may determine that the reducing-agent supplying mechanism is abnormal when the pressure detected by the pressure detectingmeans is deviated from a predetermined range, more specifically, when the pressure detected by the pressure detecting means is below a predetermined lower limit value.

According to the present invention, as the internal combustion engine, there can be exemplified a lean burn type internal combustion engine such as a lean burn gasoline engine of a direct injection type or a diesel engine of a direct injection type.

According to the present invention, as the exhaust gas purifying catalyst, there can be exemplified an storage-reduction NOx catalyst or a selective reduction NOx catalyst.

According to the present invention, as the reducing-agent, there can be exemplified a reducing-agent including hydrocarbons (HC) such as gas oil or gasoline.

According to the present invention, as the reducing-agent discharging unit of the reducing-agent supplying mechanism, there can be exemplified a fuel pump with running torque of an output shaft (crankshaft) of an internal combustion engine as a drive source.

### Brief Description of the Drawings

Fig. 1 is a view showing a schematic constitution of an internal combustion engine to which an exhaust gas purifying apparatus of an internal combustion engine according to the present invention is applied and its intake and exhaust system.
Fig. 2A is a diagram for explaining a NOx storing mechanism of an storage-reduction NOx catalyst and Fig. 2B is a diagram for explaining a NOx discharging mechanism of the storage-reduction NOx catalyst;
Fig. 3 is a block diagram showing an inner constitution of the ECU;
Fig. 4 is a diagram showing a relationship between a pressure corresponding pump and an engine revolution speed;
Fig. 5 is a flowchart showing a leak of reducing-agent determining control routine according to an example outside the terms of the claims;
Fig. 6 is a flowchart showing a leak of reducing-agent determining control routine according to a first embodiment;
Fig. 7 is a flowchart showing a first leak of reducing-agent determining control routine according to a second embodiment;
Fig. 8 is a flowchart showing a second leak of reducing-agent determining control routine according to the second embodiment;

### Detailed Description of the Preferred Embodiments

An explanation will be given of specific embodiments of an exhaust gas purifying apparatus of an internal combustion engine according to the present invention in reference to the drawings as follows. An explanation will be given here by taking an example of a case of applying a reducing-agent supplying apparatus according to the present invention to a diesel engine for driving a vehicle.

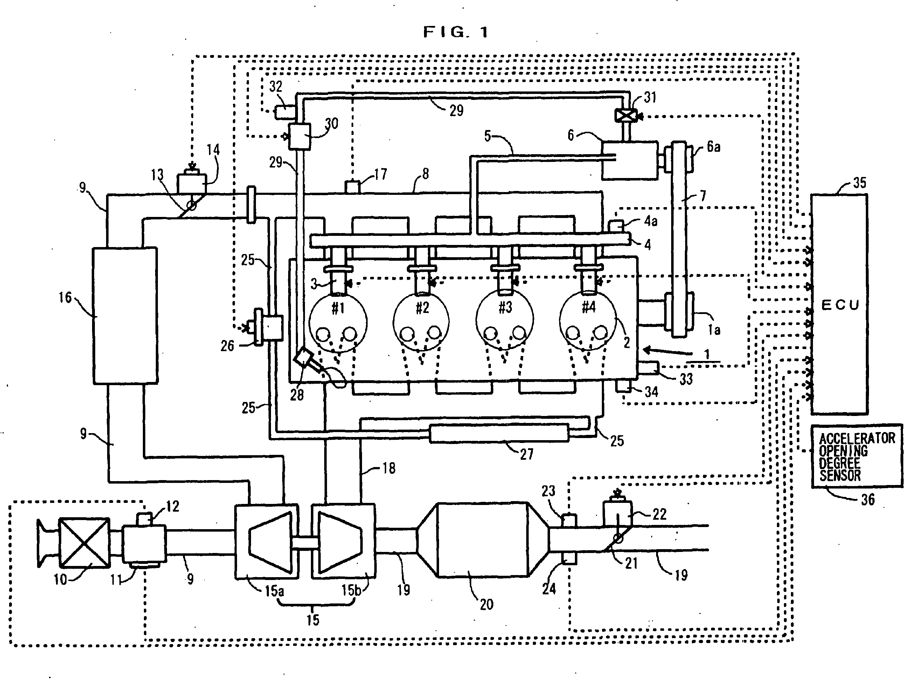

First, an explanation will be given of an example of a reducing-agent supplying apparatus outside the terms of the claims in reference to Fig. 1 through Fig. 5.

Fig. 1 is a view showing a schematic constitution of an internal combustion engine and its intake and exhaust system to which the present invention is applied.

An internal combustion engine 1 shown in Fig. 1 is a water-cooled type four-stroke cycle diesel engine having four cylinders 2.

The internal combustion engine 1 is provided with fuel injection valves 3 for injecting fuel directly to combustion chambers of the respective cylinders 2. The respective fuel injection valves 3 are connected to an accumulating chamber (common rail) 4 for accumulating fuel up to predetermined pressure. The common rail 4 is attached with a common rail pressure sensor 4a for outputting an electric signal in correspondence with pressure of fuel in the common rail 4.

The common rail 4 is communicated with a fuel pump 6 via a fuel supply pipe 5. The fuel pump 6 is a pump operated with running torque of an output shaft (crankshaft) of the internal combustion engine 1 as a drive source and a crank pulley 6 attached to an input shaft of the fuel pump 6 is connected to a crank pulley la attached to the output shaft (crankshaft) of the internal combustion engine 1 via a belt 7.

According to a fuel injection system constituted in this way, when the running torque of the crankshaft is transmitted to the input shaft of the fuel pump 6, the fuel pump 6 discharges fuel by pressure in accordance with the running torque transmitted from the crankshaft to the input shaft of the fuel pump 6.

Fuel discharged from the fuel pump 6 is supplied to the common rail 4 via the fuel supply pipe 5, accumulated by the common rail 4 to predetermined pressure and distributed to the fuel injection valves 3 of the respective cylinder 2. Further, when drive current is applied to the fuel injection valve 3, the fuel injection valve 3 is opened, as a result, fuel is injected from the fuel injection valve 3 into the cylinder 2.

Next, the internal combustion engine 1 is connected with an intake manifold 8 and respective branch pipes of the intake manifold 8 are communicated with the combustion chambers of the respective cylinder 2 via intake ports (not shown diagrammatically).

The intake manifold 8 is connected to an intake pipe 9 and the intake pipe 9 is connected to an air-cleaner box 10. The intake pipe 9 downstream from the air-cleaner box 10, is attached with an air flow meter 11 for outputting an electric signal in correspondence with mass of intake-air flowing in the intake pipe 9 and an intake-air temperature sensor 12 for outputting an electric signal in correspondence with temperature of intake-air flowing in the intake pipe 9.

A portion of the intake pipe 9 directly upstream from the intake manifold 8, is provided with an intake throttle valve 13 for regulating a flow rate of intake-air flowing in the intake pipe 9. The intake throttle valve 13 is attached with an intake-air throttling actuator 14 constituted by a stepper motor or the like for driving to open and close the intake throttle valve 13.

The intake pipe 9 disposed between the air flow meter 11 and the intake throttle valve 13 is provided with a compressor housing 15a of a centrifugal supercharger (turbocharger) 15 operated with thermal energy of exhaust gas as a drive source and a portion of the intake pipe 9 downstream from the compressor housing 15a is provided with an intercooler 16 for cooling intake-air temperature of which is elevated by being compressed in the compressor housing 15a.

According to the intake system constituted in this way, intake-air flowing into the air-cleaner box 10, is removed of dust and dirt in intake-air by an air-cleaner (not shown diagrammatically) in the air-cleaner box 10 and thereafter flows into the compressor housing 15a via the intake pipe 9.

The intake-air flowing into the compressor housing 15a is compressed by rotation of the compressor wheel installed in the compressor housing 15a. The intake-air temperature of which is elevated by having been compressed in the compressor housing 15a, is cooled by the intercooler 16 and thereafter, the flow rate is regulated by the intake throttle valve 13 as necessary and the intake-air flows into the intake manifold 8. The intake-air flowing into the intake manifold 8 is distributed to the combustion chambers of the respective cylinders 2 via the respective branch pipes and is burned with fuel injected from the fuel injection valves 3 of the respective cylinder 2 as an ignition source.

Meanwhile, the internal combustion engine 1 is connected with an exhaust manifold 18 and respective branch pipes of the exhaust manifold 18 are communicated with the combustion chambers of the respective cylinder 2 via exhaust ports (not shown diagrammatically) .

The exhaust manifold 18 is connected to a turbine housing 15b of the centrifugal supercharger 15. The turbine housing 15b is connected to an exhaust pipe 19 and the exhaust pipe 19 is connected to a muffler (not shown diagrammatically) downstream therefrom.

In the exhaust pipe 19, there is arranged an exhaust gas purifying catalyst 20 for purifying harmful gas components in exhaust gas. The exhaust pipe 19 downstream from the exhaust gas purifying catalyst 20, is attached with an air-fuel ratio sensor 23 for outputting an electric signal in correspondence with an air/fuel ratio of exhaust gas flowing in exhaust pipe 19 and an exhaust gas temperature sensor 24 for outputting an electric signal in correspondence with temperature of exhaust gas flowing in the exhaust pipe 19.

The exhaust pipe 19 downstream from the air/fuel ratio sensor 23 and the exhaust-gas temperature sensor 24, is provided with an exhaust throttle valve 21 for regulating a flow rate of exhaust gas flowing in the exhaust pipe 19. The exhaust throttle valve 21 is attached with an exhaust-gas throttling actuator 22 constituted by a stepper motor or the like for driving to open and close the exhaust throttle valve 21.

According to an exhaust system constituted in this way, the mixture (burned gas) burned in the respective cylinders 2 of the internal combustion engine 1 is discharged to the exhaust branch 18 via the exhaust ports and successively flows from the exhaust manifold 18 into the turbine housing 15b of the centrifugal supercharger 15. The exhaust gas flowing into the turbine housing 15b makes a turbine wheel to rotate which is rotatably supported in the turbine housing 15b by utilizing thermal energy that the exhaust gas has. At this occasion, running torque of the turbine wheel is transmitted to a compressor wheel of the compressor housing 15a, described above .

The exhaust gas discharged from the turbine housing 15b, flows to the exhaust gas purifying catalyst 20 via the exhaust pipe 19 and is removed or purified of harmful gas components in exhaust gas. Exhaust gas removed or purified of harmful gas components by the exhaust gas purifying catalyst 20, is emitted into the atmosphere via the muffler after the flow rate has been regulated by the exhaust throttle valve 21 as necessary.

Further, the exhaust manifold 18 and the intake manifold 8 are communicated with each other via an exhaust gas recirculating gas passage (EGR passage) 25 for recirculating a portion of exhaust gas flowing in the exhaust manifold 18 into the intake manifold 8. At a middle of the EGR passage 25, there is provided a flow-regulating valve (EGR valve) 26 constituted by an electromagnetic valve for changing a flow rate of exhaust gas (hereinafter, referred to as EGR gas) flowing in the EGR passage 25 in accordance with a magnitude of applied power.

At a portion of the EGR passage 25 upstream from the EGR valve 26, there is provided an EGR cooler 27 for cooling EGR gas flowing in the EGR passage 25.

According to an exhaust recirculating mechanism constituted in this way, when the EGR valve 26 is opened, the EGR passage 25 is brought into a conductive state, and a portion of exhaust gas flowing in the exhaust gas manifold 18, flows into the EGR passage 25 and is conducted to the intake manifold 8 via the EGR cooler 27.

At this occasion, heat exchange is carried out between the EGR gas flowing in the EGR passage 25 and a predetermined refrigerant according to the EGR cooler 27 to thereby cool EGR gas.

The EGR gas recirculated from the exhaust manifold 18 to the intake manifold 8 via the EGR passage 25, is conducted to the combustion chambers of the respective cylinders 2 while being mixed with fresh air flowing from the upstream side of the intake manifold 8 and is burned with fuel injected from the fuel injection valves 3 as the ignition source.

In this case, EGR gas per se is not burned as in water (H₂O) or carbon dioxide (CO₂) and includes inert gas components having an endothermic property and therefore, when EGR gas is included in the mixture, combustion temperature of the mixture is lowered to thereby restrain an amount of producing nitrogen oxides (NOx).

Further, when the EGR gas is cooled in the EGR cooler 27, temperature of EGR gas per se is lowered and the volume of EGR gas is reduced and therefore. When the EGR gas is supplied to the combustion chamber, environmental temperature in the combustion chamber is not elevated unnecessarily and an amount of fresh air (volume of fresh air) supplied into the combustion chamber is not unnecessarily decreased.

Next, a specific explanation will be given of the exhaust gas purifying catalyst 20.

The exhaust gas purifying catalyst 20 is a NOx catalyst forpurifyingnitrogenoxides (NOx) inexhaustgasunderpresence of a reducing-agent. Although as such NOx catalyst, a selective reduction NOx catalyst or a storage-reduction NOx catalyst can be exemplified. An explanation will be given by taking an example of the storage-reduction NOx catalyst. Hereinafter, the exhaust gas purifying catalyst 20 is referred to as the storage-reduction NOx catalyst 20.

For example, the storage-reduction NOx catalyst 20 includes alumina (Al₂O₃) as a carrier and is constituted by carrying at least one selected from the group consisting of an alkaline metal such as potassium (K), sodium (Na), lithium (Li) or caesium (Cs), an alkaline earth metal such as barium (Ba) or calcium (Ca) and a rare earth element such as lanthanum (La) or yttrium (Y), and a noble metal such as platinum (Pt) on the carrier.

The storage-reduction NOx catalyst 20 constituted in this way, stores nitrogen oxides (NOx) in exhaust gas when the air/fuel ratio of exhaust gas (hereinafter, referred to as exhaust gas air/fuel ratio) flowing into the storage-reduction NOx catalyst 20, is a lean air/fuel ratio and reduces, and reduces and purifies exhaust gas while discharging stored nitrogen oxides (NOx) when oxygen concentration of the inflow-exhaust gas is lowered and the reducing-agent is present.

Further, the exhaust gas air/fuel ratio, mentioned here, signifies a ratio of a total of an amount of air supplied to the exhaust passage upstream from the exhaust gas purifying catalyst, the combustion chambers and the intake passage to a total of an amount of fuel (hydrocarbon). Therefore, so far as fuel, reducing-agent or air is not supplied into the exhaust passage upstream from the storage-reduction NOx catalyst 20, the exhaust gas air/fuel ratio coincides with the air/fuel ratio of the mixture supplied to the combustion chambers.

An explanation will be given here of a mechanism of intaking and discharging NOx of the storage-reduction NOx catalyst 20 by taking an example of the storage-reduction NOx catalyst in which platinum (Pt) and barium (Ba) are carried on a carrier comprising alumina.

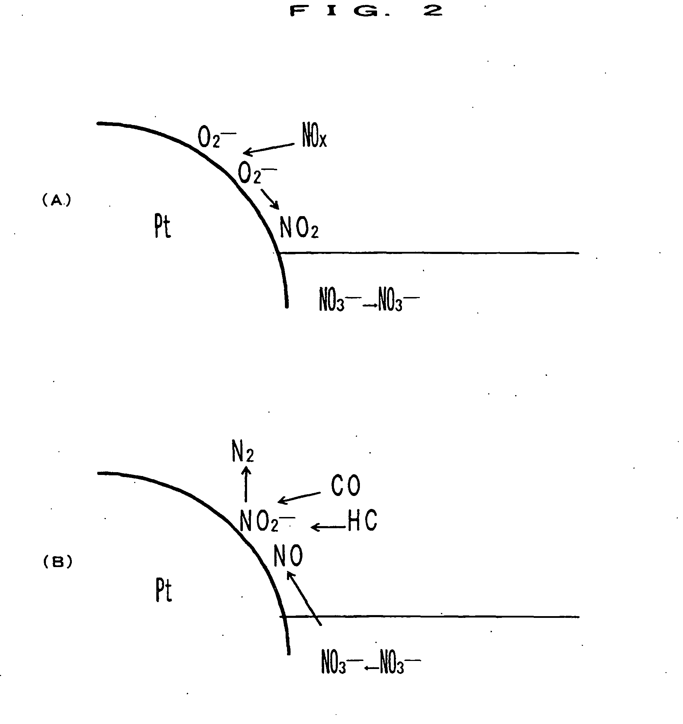

The operation of intaking and discharging NOx of the storage-reduction NOx catalyst 20 considers to be substantially carried out by a mechanism shown by Figs. 2A and 2B.

First, according to the storage-reduction NOx catalyst 20, when the air/fuel ratio of exhaust gas flowing into the storage-reduction NOx catalyst 20, becomes a lean air/fuel ratio to thereby increase the oxygen concentration in the exhaust gas, as shown by Fig. 2A, oxygen (O₂) in the exhaust gas is adhered onto the surface of platinum (Pt) in the form of O₂⁻ or O²⁻, nitrogen monoxide (NO) in the exhaust gas reacts with O₂⁻ or O²⁻ on the surface of platinum (Pt) to thereby form nitrogen dioxide (NO₂) (2NO+O₂→2NO₂). Nitrogen dioxide (NO₂) is bonded with barium oxide (BaO) while being oxidized on the surface of platinum (Pt) to thereby form nitric acid ion (NO₃⁻). In this way, nitrogen oxides (NOx) in the exhaust gas are stored in the storage-reduction NOx catalyst as nitric acid ion (NO₃-).

The above-described NOx storing operation is continued so far as the air/fuel ratio of the inflow-exhaust gas is lean and the NOx storage ability of the storage-reduction NOx catalyst is not saturated.

In contrast thereto, according to the storage-reduction NOx catalyst 20, when the oxygen concentration of the inflow-exhaust gas is lowered, the amount of producing nitrogen dioxide (NO₂) is decreased and therefore, nitric acid ion (NO₃-) bonded to barium oxide (BaO) conversely becomes nitrogen dioxide (NO₂) or nitrogen monoxide (NO) and is separated from the reduction type NOx catalyst.

That is, when the oxygen concentration of exhaust gas flowing into the storage-reduction NOx catalyst 20 is lowered, nitrogen oxides (NOx) stored in the storage-reduction NOx catalyst in the form of nitric acid ion (NO₃-) becomes nitrogen dioxide (NO₂) or nitrogen monoxide (NO) and are discharged from the storage-reduction NOx catalyst.

As shown by Fig. 2B, nitrogen oxides (NOx) discharged from the storage-reduction NOx catalyst 20, reacts with a reducing component included in the exhaust gas (for example, activated species of hydrocarbons (HC) or carbon monoxide (CO) partially reduced by reacting with oxygen O₂- or O²⁻ on platinum (Pt) of the storage-reduction NOx 20) and is reduced to nitrogen (N₂).

That is, hydrocarbons (HC) and carbon monoxide (CO) in the exhaust gas are oxidized by reacting with O₂⁻ or O²⁻ on platinum (Pt), and when hydrocarbons (HC) and carbon monoxide (CO) still remain even in the case in which O₂⁻ or O²⁻ on platinum (Pt) has been consumed thereby, the hydrocarbons (HC) and carbon monoxide (CO) react with nitrogen oxides (NOx) discharged from the storage-reduction NOx catalyst 20 and nitrogen oxides (NOx) discharged from the internal combustion engine 1, and as a result, nitrogen oxides (NOx) are reduced into nitrogen (N₂).

Therefore, by enabling the air/fuel ratio of exhaust gas flowing into the storage-reduction NOx catalyst 20 to a theoretical air/fuel ratio or a rich air/fuel ratio, nitrogen oxides (NOx) stored in the storage-reduction NOx catalyst 20 can be reduced while being discharged.

Meanwhile, there is a limit in the NOx storage ability of the storage-reduction NOx catalyst 20 and therefore, when exhaust gas having the lean air/fuel ratio flows into the storage-reduction NOx catalyst 20 over a long period of time, the NOx storage ability of the storage-reduction NOx catalyst 20 is saturated and nitrogen oxides (NOx) in the exhaust gas are emitted into the atmosphere without being removed or purified by the storage-reduction NOx catalyst 20.

However, according to a diesel engine such as the internal combustion engine 1, in most of an operating region, the mixture having the lean air/fuel ratio is burned and in accordance therewith in the most operating region, the air/fuel ratio of the exhaust gas becomes the lean air/fuel ratio and therefore, the NOx storage ability of the storage-reduction NOx catalyst 20 is easy to saturate.

Therefore, when the storage-reduction NOx catalyst 20 is applied to a lean burn internal combustion engine such as a diesel engine, it is necessary to turn the air/fuel ratio of exhaust gas to the theoretical air/fuel ratio or the rich air/fuel ratio at a predetermined timing before the NOx storage ability of the storage-reduction NOx catalyst 20 is saturated.

With regard thereto, according to the internal combustion engine 1, there is provided a reducing-agent supplying mechanism for adding fuel (gas oil) constituting a reducing-agent in exhaust gas flowing in the exhaust passage upstream from the storage-reduction NOx catalyst 20.

As shown by Fig. 1, the reducing-agent supplying mechanism is provided with a reducing-agent injection valve 28 in which an injection hole is attached to a cylinder head of the internal combustion engine 1 to face inside of the exhaust manifold 18, a reducing-agent supplying passage 29 for conducting fuel discharged from the above-described fuel pump 6 to the reducing-agent injection valve 28, a flow-regulating valve 30 provided at a middle of the reducing-agent supplying passage 29 for regulating a flow rate of fuel flowing in the reducing-agent supplying passage 29, a shut-off valve 31 provided at the reducing-agent supplying passage 29 upstream from the flow-regulating valve 30 for shutting off flow of fuel in the reducing-agent supplying passage29andareducing-agent pressure sensor 32 attached to the reducing-agent supplying passage 29 upstream from the flow-regulating valve 30 for outputting an electric signal in correspondence with pressure in the reducing-agent supplying passage 29.

Further, it is preferable that the reducing-agent injection valve 28 is attached to the cylinder head such that the injection hole of the reducing-agent injection valve 28 is projected to the exhaust port of the cylinder 2 downstream from a portion of the exhaust manifold 18 in contact with the EGR passage 25 and the most proximate to a portion of the exhaust manifold 18 collecting the four branch pipes and is directed to the collecting portion of the exhaust manifold 18.

This is for preventing the reducing-agent (unburned fuel component) injected from the reducing-agent injection valve 28 from flowing into the EGR passage 25 and making the reducing-agent reach the turbine housing 15b of the centrifugal supercharger without staying in the exhaust manifold 18.

Further, although according to the example shown in Fig. 1, a first (#1) cylinder 2 is disposed at a position most proximate to the aggregating portion of the exhaust manifold 18 among the four cylinders 2 of the internal combustion engine 1 and therefore, the reducing-agent injection valve 28 is attached to the exhaust port of the first (#1) cylinder 2. However, when the cylinder 2 other than the first (#1) cylinder 2 is disposed at a position most proximate to the aggregating portion of the exhaust manifold 18, the reducing-agent injection valve 28 is attached to the exhaust port of such cylinder 2.

Further, the reducing-agent injection valve 28 may be attached to penetrate a water jacket (not shown diagrammatically) formed in the cylinder head or proximately to the water jacket to thereby cool the reducing-agent injection valve 28 by utilizing cooling water flowing in the water jacket.

Accordingtothe reducing-agentsupplying mechanism,when the flow-regulating valve 30 is opened, fuel at high pressure discharged from the fuel pump 6 is applied to the reducing-agent injection valve 28 via the reducing-agent supplying passage 29. Further, when pressure of fuel applied to the reducing-agent injection valve 28 reaches valve opening pressure or higher, the reducing-agent injection valve 28 is opened and fuel as reducing-agent is injected into the exhaust manifold 18.

The reducing-agent injected from the reducing-agent injection valve 28 into the exhaust gas manifold 18, flows into the turbine housing 15b along with exhaust gas flowed from the upstream side of the exhaust gas manifold 18. The exhaust gas and the reducing-agent which have flowed into the turbine housing 15b, are stirred and uniformly mixed by rotation of the turbine wheel to thereby form the exhaust gas having a rich air/fuel ratio.

The exhaust gas having the rich air/fuel ratio formed in this way, flows from the turbine housing 15b into the storage-reduction NOx catalyst 20 via the exhaust pipe 19 and reduces nitrogen oxides (NOx) stored in the storage-reduction NOx catalyst 20 into nitrogen (N₂) while being discharged.

Thereafter, when the flow-regulating valve 30 is closed and supply of the reducing-agent from the fuel pump 6 to the reducing-agent injection valve 28 is shut off, pressure of fuel applied to the reducing-agent injection valve 28 becomes less than the valve opening pressure. As a result, the reducing-agent injection valve 28 is closed and addition of the reducing-agent into the exhaust gas manifold 18 is stopped.

The internal combustion engine 1 constituted as described above, is also installed with an electronic control unit (ECU) 35 for controlling the internal combustion engine 1. The ECU 35 is a unit for controlling an operational condition of the internal combustion engine 1 and an operating state of the internal combustion engine 1 in accordance with a request of a driver.

The ECU 35 is connected with various sensors of a common rail pressure sensor 4a, an air flow meter 11, an intake-air temperature sensor 12, an intake pipe pressure sensor 17, an air/fuel ratio sensor 23, an exhaust gas temperature sensor 24, the reducing-agent pressure sensor 32, a crank position sensor 33, a water temperature sensor 34 and an accelerator opening degree sensor 36 via electric wirings and output signals of the various sensors are inputted to the ECU 35.

Meanwhile, the ECU 35 is connected with fuel injection valves 3, an intake-air throttling actuator 14, an exhaust-gas throttling actuator 22, an EGR valve 26, a flow-regulating valve 30 and the shut-off valve 31 via electric wirings and the respective portions can be controlled by the ECU 35.

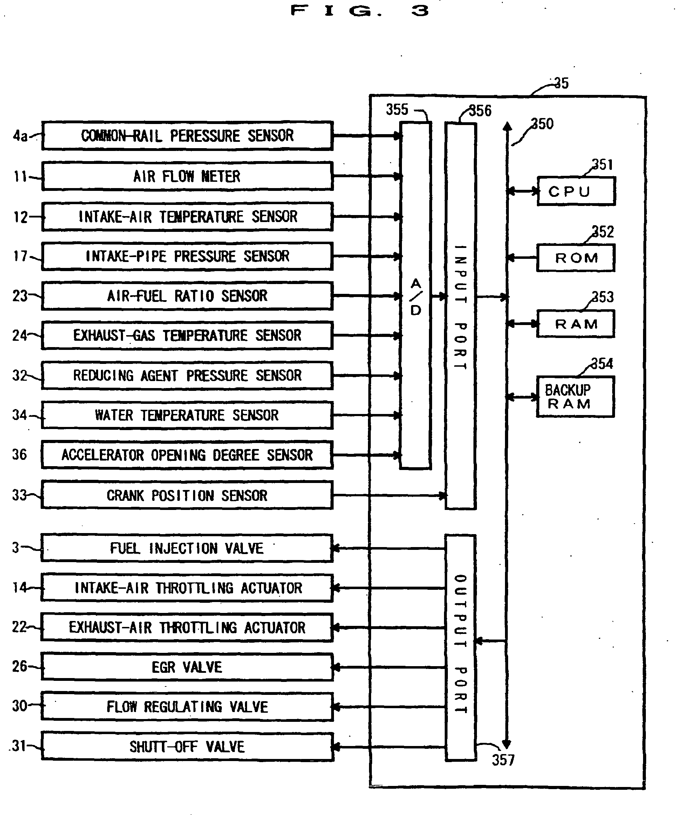

In this case, as shown by Fig. 3, the ECU 35 is provided with a CPU 351, a ROM 352, a RAM 353, a backup RAM 354, an input port 356 and an output port 357 and is provided with an A/D converter (A/D) 355 connected to the input port 356.

The input port 356 inputs an output signal of a sensor for outputting a signal in a digital signal type such as the crank position sensor 33 and transmits the output signal to the CPU 351 or the RAM 353.

The input port 356 inputs output signals of sensors for outputting signals in an analog signal type such as the common rail pressure sensor 4a, the air flow meter 11, the intake-air temperature sensor 12, the intake pipe pressure sensor 17, the air/fuel ratio sensor 23, the exhaust-gas temperature sensor 24, the reducing-agent pressure sensor 32, the water temperature sensor 34 and the accelerator opening degree sensor 36 via the A/D 355 and transmits the output signals to the CPU 351 or the RAM 353.

The output port 357 is connected with the fuel injection valves 3, the intake-air throttling actuator 14, the exhaust-gas throttling actuator 22, the EGR valve 26, the flow-regulating valve 30 and the shut-off valve 31 via electric wirings and transmits a control signal outputted from the CPU 351 to the fuel injection valves 3, the intake-air throttling actuator 14, the exhaust-gas throttling actuator 22, the EGR valve 26, the flow-regulating valve 30 or the shut-off valve 31.

The ROM 352 is stored with a leak of reducing-agent determining control routine for determining leakage of the reducing-agent in the reducing-agent adding mechanism in addition to various application programs such as a fuel injection valve control routine for controlling the fuel injection valve 3, an intake throttling control routine for controlling the intake-air throttling valve 13, an exhaust throttling control routine for controlling the exhaust-gas throttling valve 21, an EGR control routine for controlling the EGR valve 26 and a reducing-agent adding control routine for controlling the flow-regulating valve 30.

The ROM 352 is stored with various control maps in addition to the above-mentioned application programs. The control maps include a fuel injection amount control map showing a relationship between the operational state of the internal combustion engine 1 and a basic fuel injection amount (basic fuel injection period), a fuel injection timing control map showing a relationship between the operational state of the internal combustion engine 1 and a basic fuel injection timing, an intake-air throttling valve opening degree control map showing a relationship between the operational state of the internal combustion engine 1 and a target opening degree of the intake-air throttling valve 13, an exhaust-gas throttling valve opening degree control map showing a relationship between the operational state of the internal combustion engine 1 and a target opening degree of the exhaust-gas throttling valve 21, an EGR valve opening degree control map showing a relationship between the operational state of the internal combustion engine 1 and a target opening degree of the EGR valve 26 and a flow-regulating valve control map showing a relationship between the operational state of the internal combustion engine 1 and a valve opening timing of the flow-regulating valve 30.

The RAM 353 is stored with the output signals from the respective sensors and calculation results of the CPU 351. For example, the calculation result is an engine revolution speed calculated on the basis oftemporal intervals of outputting pulse signals by the crank position sensor 33. The data is rewritten to newest data every time of outputting the pulse signal by the crank position sensor 33.

The backup RAM 354 is an involatile memory capable of storing data even after operation of the internal combustion engine 1 has been stopped.

The CPU 351 is operated in accordance with the application programs stored to the ROM 352 and executes leak of reducing-agent determining control in addition to the fuel injection valve control, intake throttling control, exhaust throttling control, the EGR control and the reducing-agent adding control.

For example, in the fuel injection valve control, the CPU 351 firstly determines a fuel amount injected from the fuel injection valve 3 and successively determines a timing of injecting fuel from the fuel injection valve 3.

When the fuel injection amount is determined, the CPU 351 reads the engine revolution speed and the output signal (accelerator opening degree) of the accelerator opening degree sensor 36 stored to RAM 353. The CPU 351 makes access to the fuel injection amount control map and calculates the basic fuel injection amount (basic fuel injection period) in correspondence with the engine revolution speed and the accelerator opening degree. The CPU 351 corrects the basic fuel injection period on the basis of values of the output signals of the air flow meter 11, the intake-air temperature sensor 12 and the water temperature sensor 34 and determines a final fuel injection period.

When the fuel injection timing is determined, the CPU 351 makes access to the fuel injection start timing control map and calculates the basis fuel injection timing in correspondence with the engine revolution speed and the accelerator opening degree. The CPU 351 corrects the basic fuel injection timing with values of the output signals of the air flow meter 11, the intake-air temperature sensor 12 and the water temperature sensor 34 as parameters and determines final fuel injection timing.

When the fuel injection period and the fuel injection timing are determined, the CPU 351 compares the fuel injection timing with output signals of the crank position sensor 33, and starts applying drive power to the fuel injection valve 3 at a time when the output signal of the crank position sensor 33 coincides with the fuel injection start timing. The CPU 351 stops applying the drive power with respect to the fuel injection valve 3 when the time from when an application of the drive power to the fuel injection valve 3 has been started, reached the fuel injection period.

Further, in the fuel injection control, when the operational state of the internal combustion engine 1 is brought into an idling operational state, the CPU 351 calculates a target idling revolution speed of the internal combustion engine 1 with a value of the output signal of the water temperature sensor 34 and operational states of accessories operated by utilizing running torque of the crankshaft such as a compressor of a vehicular air-conditioning apparatus, as parameters. Further, the CPU 351 controls the fuel injection amount by feedback control such that an actual idling revolution speed coincides with the target idling revolution speed.

Further, in the intake throttle control, the CPU 351 reads out, for example, the engine revolution speed and the accelerator opening degree stored to RAM 353. The CPU 351 makes access to the intake-air throttling valve opening degree control map and calculates a target intake-air throttling valve opening degree in correspondence with the engine revolution speed and the accelerator opening degree. The CPU 351 applies drive power in correspondence with the target intake-air throttling valve opening degree to the intake-air throttling actuator 14. At this occasion, the CPU 351 may detect an actual opening degree of the intake-air throttling valve 13 and may control the intake-air throttling actuator 14 by feedback control on the basis of a difference between the actual opening degree of the intake-air throttling valve 13 and the target intake-air throttling valve opening degree.

Further, in the exhaust throttling control, the CPU 351 controls the exhaust-gas throttling actuator 22 to drive the exhaust-gas-throttling valve 21 in a valve closing direction when the internal combustion engine 1 is brought into a warming-up operational state after cold start or when a heater for a vehicular compartment is brought into an operational state.

In this case, load of the internal combustion engine 1 is increased and the fuel injection amount is increased in correspondence therewith. As a result, a heat generating amount of the internal combustion engine 1 is increased, warming-up of the internal combustion engine 1 is expedited and a heat source of the heater for a vehicular compartment is ensured.

Further, in the EGR control, the CPU 351 reads out the engine revolution speed, the output signal of the water temperature sensor 34 (cooling water temperature) and the output signal of the accelerator opening degree sensor 36 (accelerator opening degree) stored to RAM 353 and determines whether conditions of executing the EGR control are established.

As the conditions of executing the EGR control, there can be exemplified conditions that the cooling water temperature is equal to or higher than predetermined temperature, that the internal combustion engine 1 is operated continuously for a predetermined period or more from starting the engine and that an amount of changing the accelerator opening degree is a positive value.

When it is determined that the conditions of executing the EGR control have been established, the CPU 351 makes access to the EGR valve opening degree control map with the engine revolution speed and the accelerator opening degree as parameters and calculates a target EGR valve opening degree in correspondence with the engine revolution speed and the accelerator opening degree. The CPU 351 applies drive power in correspondence with the target EGR valve opening degree to the EGR valve 26. Meanwhile, when it is determined that the conditions of executing the EGR control have not been established, The CPU 351 controls the EGR valve 26 to maintain in a fully closed state.

Further, in the EGR control, the CPU 351 may carry out so-called EGR valve feedback control for controlling the opening degree of the EGR valve 26 by feedback control with an intake-air amount of the internal combustion engine 1 as a parameter.

In the EGR valve feedback control, for example, the CPU 351 determines a target intake-air amount of the internal combustion engine 1 with the accelerator opening degree and the engine revolution speed as parameters. At this occasion, a relationship among the accelerator opening degree, the engine revolution speed and the target intake-air amount may previously be formed in a map, and the target intake-air amount may be calculated from the map, the accelerator opening degree and the engine revolution speed.

When the target intake-air amount is determined by the above-described procedure, the CPU 351 reads out a value of the output signal of the air flow meter 11 (actual intake-air amount) stored to RAM 353 and compares an actual intake-air amount and the target intake-air amount.

When the actual intake-air amount is smaller than the target intake-air amount, the CPU 351 closes the EGR valve 26 by a predetermined amount. At this occasion, an amount of EGR gas flowed from the EGR passage 25 into the intake manifold 8 is decreased and an amount of EGR gas intaken to the cylinder 2 of the internal combustion engine 1 is decreased accordingly. As a result, an amount of fresh air intaken into the cylinder 2 of the internal combustion engine 1 is increased by an amount of decreased EGR gas.

Meanwhile, when the actual intake-air amount is larger than the target intake-air amount, the CPU 351 opens the EGR valve 26 by a predetermined amount. In this case, the amount of EGR gas flowed from the EGR passage 25 into the intakemanifold 8 is increased and the amount of EGR gas intaken to the cylinder 2 of the internal combustion engine 1 is increased accordingly. As a result, the amount of fresh air intaken to the cylinders 2 of the internal combustion engine 1 is decreased by an amount of increased EGR gas.

Further, in the reducing-agent adding control, the CPU 351 firstly determines whether conditions of adding the reducing-agent are established. As the conditions of adding the reducing-agent, for example, there can be exemplified conditions that the storage-reduction NOx catalyst 20 is brought into an active state, that a value of the output signal of the exhaust-gas temperature sensor 24 (exhaust temperature) is equal to or smaller than a predetermined upper limit value and that there is not carried out temperature elevating control or control of recovering a SOₓ poisoning in order to recover the storage-reduction NOx catalyst 20 from the SOₓ poisoning.

When it is determined that the conditions of adding the reducing-agent have been established, the CPU 351 controls the flow rate controlling valve 30 such that the air-fuel ratio of exhaust gas flowing into the storage-reduction NOx catalyst 20, becomes the theoretical air/fuel ratio or the rich air/fuel ratio in spike at a comparatively short period to thereby discharge and reduce nitrogen oxides (NOx) stored in the storage-reduction NOx catalyst 20 in a short period.

At this occasion, the CPU 351 reads out the engine revolution speed, the output signal of the accelerator opening degree sensor 36 (accelerator opening degree), the value of the output signal of the air flow meter 11 (intake-air amount) and the fuel injection amount stored in the RAM 353. The CPU 351 makes access to the flow-regulating valve control map of ROM 352 with the engine revolution speed, the accelerator opening degree, the intake-air amount and the fuel injection amount as parameters and calculates a timing of opening the flow-regulating valve 30. The CPU 351 opens the flow-regulating valve 30 in accordance with the valve opening timing.

In this case, when fuel at high pressure discharged from the fuel pump 6 is supplied to the reducing-agent injection valve 28 via the reducing-agent supplying passage 29 and when a pressure of fuel applied to the reducing-agent injection valve 28 reaches a valve opening pressure or higher thereby, the reducing-agent injection valve 28 is opened and injects fuel as the reducing-agent into the exhaust manifold 18.

The reducing-agent injected from the reducing-agent injection valve 28 into the exhaust manifold 18, is mixed with exhaust gas flowed from the upstream side of the exhaust manifold 18 to thereby form exhaust gas having the theoretical air/fuel ratio or the rich air/fuel ratio and the exhaust gas having the theoretical air/fuel ration or the rich air/fuel ratio flows into the storage-reduction NOx catalyst 20.

When the exhaust gas having the theoretical air/fuel ratio or the rich air/fuel ratio flows to the storage-reduction NOx catalyst 20 in this way, nitrogen oxides (NOx) stored in the storage-reduction NOx catalyst 20 is reduced to nitrogen (N₂) while being discharged.

Next, a description will be given of the leak of reducing-agent determining control.

In the reducing-agent adding mechanism, when the 30 is opened, a portion of fuel discharged from the fuel pump 6 is supplied to the reducing-agent injection valve 28 via the reducing-agent supplying passage 29 and when pressure of fuel applied to the reducing-agent injection valve 28 becomes equal to or higher than valve opening pressure thereby, the reducing-agent injection valve 28 is opened and fuel as the reducing-agent is injected into the exhaust manifold 18.

When the flow-regulating valve 30 is switched from a valve opening state to a valve closing state, supply of fuel from the fuel pump 6 to the reducing-agent injection valve 28 is shut off, pressure of fuel applied to the reducing-agent injection valve 28 is lowered to less than the valve opening pressure and therefore, the reducing-agent injection valve 28 is automatically closed.

At this occasion, as fuel discharged from the fuel pump 6 is supplied to the reducing-agent supplying passage 29 upstream from the flow-regulating valve 30 and therefore, when leakage of fuel is not caused in the passage from the fuel pump 6 to the flow-regulating valve 30, pressure in the reducing-agent supplying passage 29 upstream from the flow-regulating valve 30 (hereinafter, referred to as adding fuel pressure) becomes pressure in correspondence with discharging pressure of the fuel pump 6 (hereinafter, referred to as a pressure corresponding pump).

Meanwhile, when fuel is leaked from the reducing-agent supplying passage 29 upstream from the flow-regulating valve 30 to the reducing-agent supplying passage 29 downstream from the flow-regulating valve 30 by a failure in closing the flow-regulating valve 30, or when by destruction of the passage from the fuel pump 6 to the flow-regulating valve 30, fuel in the passage leaks to outside of the passage, the adding fuel pressure becomes lower than the pressure corresponding pump.

Therefore, when the adding fuel pressure, or an output signal value of the reducing-agent pressure sensor 32 (adding fuel pressure) is lower than the pressure corresponding pump, it can be determined that fuel is leaked in the reducing-agent supplying mechanism.

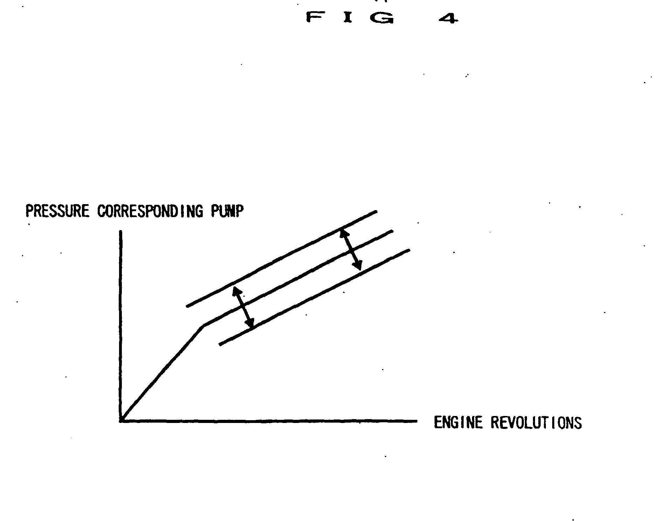

Meanwhile, according to the fuel pump 6 of the embodiment, the drive source is constituted by the running torque of the crankshaft and therefore, the discharging pressure of the fuel pump 6 is changed in accordance with the engine revolution speed and the pressure corresponding pump in the reducing-agent supplying passage 29 upstream from the flow regulating valve 30 is changed also in accordance with the engine revolution speed as shown by Fig. 4.

With regard thereto, according to the leak of reducing-agent determining control, the CPU 351 inputs the output signal value (adding fuel pressure) of the reducing-agent pressure sensor 32 when the flow-regulating valve 30 is brought into the valve closing state, calculates the pressure corresponding pump in correspondence with the engine revolution speed at the time point and compares the adding fuel pressure and the pressure corresponding pump to thereby determine leakage of the reducing-agent.

However, pressure of fuel may be changed by an external factor such as temperature of a wall face of the reducing-agent supplying passage 29 or outside temperature and therefore, it is preferable that the CPU 351 determines that the reducing-agent is leaked when the adding fuel pressure is lower than the pressure corresponding pump by the predetermined pressure or more.

Further, the relationship between the engine revolution speed and the pressure corresponding pump may previously be calculated experimentally and the relationship may be formed in a map and stored to the ROM 352.

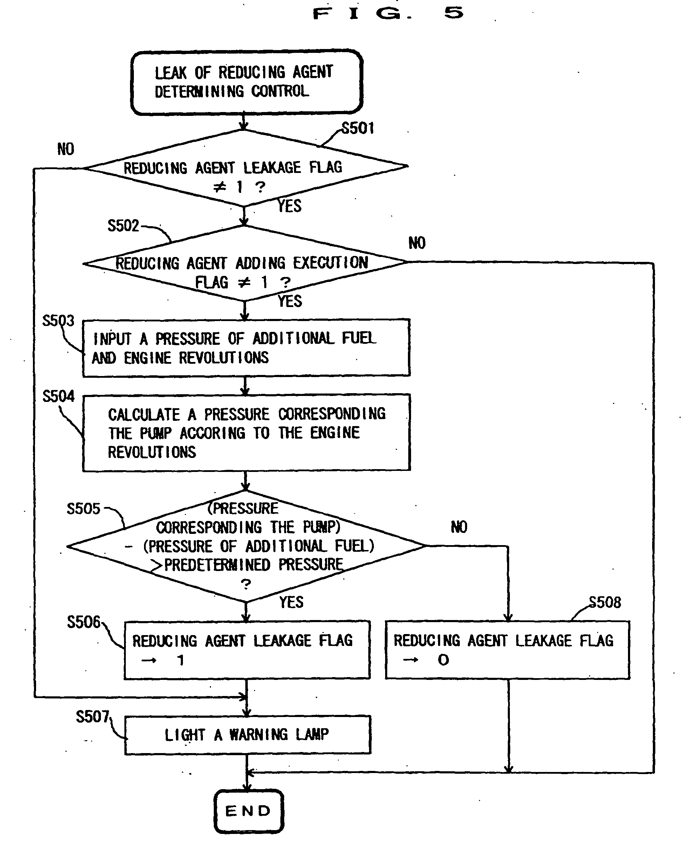

An explanation will be given of the leak of reducing-agent determining control in reference to a flowchart of Fig. 5 as follows.

The flowchart shown by Fig. 5 is a flowchart showing the leak of reducing-agent determining control routine. The leak of reducing-agent determining control routine is a routine repeatedly executed by the CPU 351 at every predetermined period (for example, every time of outputting a predetermined number of pulse signals by the crank position sensor 33).

According to the leak of reducing-agent determining control routine, first, at S501, the CPU 351 determines whether "1" is stored at a reducing-agent leakage flag storing region set in the RAM 353.

The reducing-agent leakage flag storing region is a storing region set with "1" when leakage of the reducing-agent (fuel) is determined in the reducing-agent adding mechanism and reset to "0" when the reducing-agent is determined not to leak.

When it is determined that "1" is not stored to the reducing-agent leakage flag storing region at S501, in other words, when it is determined that "0" is stored to the reducing-agent leakage flag storing region, the CPU 351 proceeds to S502 and it is determined whether "1" is stored to a reducing-agent adding execution flag storing region set in RAM 353.

The reducing-agent adding execution flag storing region is a storing region set with "1" when addition of the reducing-agent is executed in a separate reducing-agent adding control routine and is reset to "0" when addition of the reducing-agent stops executing.

At S502, when it is determined that "1" is stored to the reducing-agent adding execution flag storing region, the CPU 351 regards that the flow-regulating valve 30 is not brought into the valve closing state and execution of the routine is temporarily finished.

Meanwhile, in S502, when "1" is not stored to the reducing-agent adding execution flag storing region, that is, when it is determined that "0" is stored to the reducing-agent adding execution flag storing region, the CPU 351 regards that the flow-regulating valve 30 is brought into the valve closing state and proceeds to S503.

In S503, the CPU 351 makes access to the RAM 353 and reads out the newest output signal values of the engine revolution speed and the reducing-agent pressure sensor 32 (adding fuel pressure).

In S504, the CPU 351 makes access to the map showing the relationship between the engine revolution speed and the pressure corresponding pump and calculates the pressure corresponding pump in correspondence with the engine revolution speed read in S503.

At S505, the CPU 351 determines whether difference pressure provided by subtracting the adding fuel pressure read in S503 from the pressure corresponding pump calculated in S504, is higher than predetermined pressure.

At S505, when the difference pressure provided by subtracting the adding fuel pressure from the pressure corresponding pump is equal to or lower than the predetermined pressure, the CPU 351 regards that leakage of fuel is not caused in the reducing-agent adding mechanism and proceeds to S508 and resets "0" to the reducing-agent leakage flag storing region of the RAM 353 to thereby finish executing the routine.

Meanwhile, in S505, when it is determined that the difference pressure provided by subtracting the adding fuel pressure from the pressure corresponding pump, is higher than the predetermined pressure, the CPU 351 regards that leakage of fuel is caused in the reducing-agent adding mechanism and proceeds to S506.

In S506, the CPU 531 sets "1" into the reducing-agent leakage flag storing region of the RAM 353.

In S507, the CPU 351 lights a warning lamp (not shown diagrammatically) provided in the vehicular compartment and finishes executing the routine. Further, the CPU 351 may light the warning lamp and prohibit addition of the reducing-agent by closing the shut-off valve 31.

In this way, the CPU 351 executes the above-described leak of reducing-agent determining control routine to thereby realize abnormality determining means according to the present invention.

According to the above-described example, leakage of the reducing-agent in the reducing-agent adding mechanism can be detected on the basis of fuel pressure in the reducing-agent supplying passage 29 and therefore, by reflecting leakage of the reducing-agent to the reducing-agent adding control, excessive supply or addition deficiency of the reducing-agent with respect to the storage-reduction NOx catalyst 20 can be restrained and deterioration of exhaust emission can be minimized.

Further, according to the example, in the case in which leakage of the reducing-agent is detected in the reducing-agent addingmechanism, when the shut-off valve 31 is closed to thereby prohibit addition of the reducing-agent, leakage of the reducing-agent from the reducing-agent supplying mechanism to outside or unprepared addition of the reducing-agent from the reducing-agent supplying mechanism to the exhaust manifold 18 can also be prevented. Thereby, there can be prevented overheating of the storage-reduction NOx catalyst 20 caused by excessive addition of the reducing-agent to the storage-reduction NOx catalyst 20.

### (Embodiment 1)

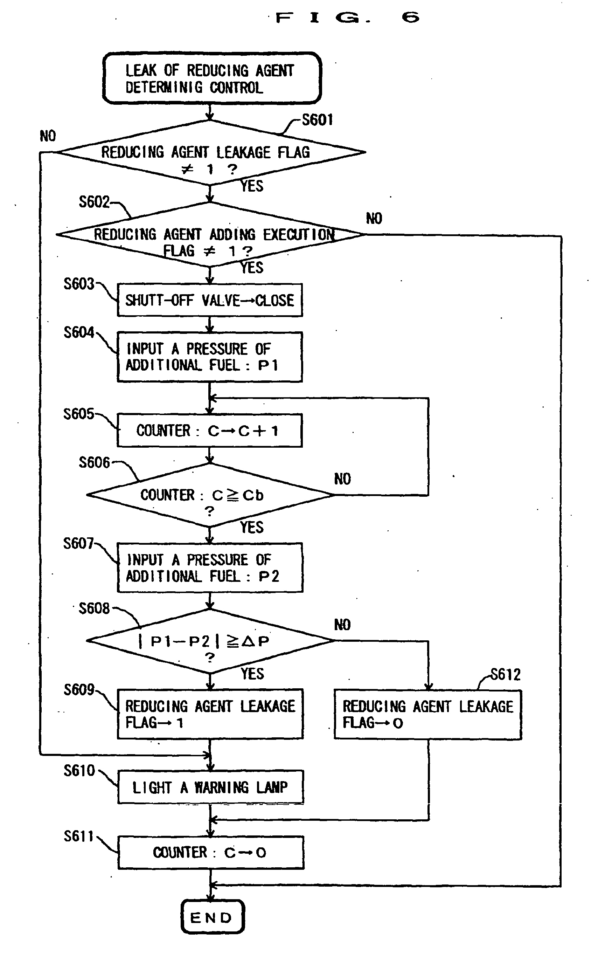

Next, an explanation will be given of a first embodiment of an abnormality detecting apparatus of the reducing-agent supplying apparatus according to the present invention in reference to Fig. 6. An explanation will be given here of a constitution different from that of the above-described example and an explanation will be omitted with regard to the similar constitution.

According to the leak of reducing-agent determining control according to the above example, leakage of the reducing-agent is determined on the basis of the adding fuel pressure when the flow-regulating valve 30 is brought into the valve closing state and the shut-off valve 31 is brought into the valve opening state and accordingly, leakage of the reducing-agent is easy to detect when leakage of a comparatively large amount of the reducing-agent is caused, when leakage of a small amount of the reducing-agent is caused, there is a possibility that the discharging amount of the fuel pump 6 becomes larger than the leakage amount and there is a possibility that it is difficult to detect leakage of a small amount of the reducing-agent.

In contrast thereto, according to the embodiment, the CPU 351 determines leakage of the reducing-agent on the basis of a change in the adding fuel pressure when the flow-regulating valve 30 is brought into the valve closing state and the shut-off valve 31 is brought into the valve closing state.

When both of the flow-regulating valve 30 and the shut-off valve 31 are brought into the valve closing state, the reducing-agent supplying passage 29 between the flow-regulating valve 30 and the shut-off valve 31 constitutes a closed space and fuel applied with the pressure corresponding pump is confined in the closed space.

At this occasion, when there is caused leakage of the reducing-agent from the reducing-agent supplying passage 29 upstream from the flow-regulating valve 30 to the reducing-agent supplying passage 29 downstream therefrom caused by a failure in closing the flow-regulating valve 30, leakage of the reducing-agent from the reducing-agent supplying passage 29 upstream from the shut-off valve 31 to the reducing-agent supplying passage 29 downstream therefrom caused by a failure in closing the shut-off valve 31, or leakage of the reducing-agent from inside of the passage to outside of the passage by destruction of the passage from the shut-off valve 31 to the flow-regulating valve 30, the adding fuel pressure in the closed space is lowered or elevated.

When leakage of the reducing-agent in the closed space is comparatively small, the adding fuel pressure of the closed space is gradually changed, however, by detecting a change in adding fuel pressure by taking a period to some degree, leakage of a comparatively small amount of the reducing-agent becomes easy to detect.

Hence, according to the leak of reducing-agent determining control of the embodiment, the CPU 351 closes the shut-off valve 31 for a predetermined period of time when the flow-regulating valve 30 is brought into the valve closing state, detects a change in the adding fuel pressure during the predetermined period of time and determines that leakage of the reducing-agent is caused at the reducing-agent supplying mechanism when an amount of the change in the adding fuel pressure is equal to or larger than a predetermined amount.

An explanation will be given as follows of the leak of reducing-agent determining control according to the embodiment in reference to a flowchart of Fig. 6.

The flowchart shown in Fig. 6 is a flowchart showing the leak of reducing-agent determining control routine and the leak of reducing-agent determining control routine is a routine repeatedly executed at every predetermined period (for example, every time of outputting a predetermined number of pulse signals by the crank position sensor 33) by the CPU 351.

According to the leak of reducing-agent determining control routine, first, in S601, the CPU 351 makes access to the reducing-agent leakage flag storing region of RAM 353 and determines whether "1" is stored to the reducing-agent leakage flag storing region.

In S601, when it is determined that "1" has already been stored to the reducing-agent leakage flag storing region, the CPU 351 proceeds to S610, lights a warning lamp provided in the vehicular compartment and expedites a driver of the vehicle to repair the reducing-agent supplying mechanism.

Meanwhile, in S601, when it is determined that "1" is not stored to the reducing-agent leakage flag storing region, the CPU 351 proceeds to S602 and determines whether "1" is stored to the reducing-agent adding execution flag storing region set to RAM 353.

In S602, when it is determined that "1" is stored to the reducing-agent adding execution flag storing region, the CPU 351 regards that the flow-regulating valve 30 is not brought into the valve closing state and temporarily finishes executing the routine.

Meanwhile, in S602, when it is determined that "1" is not stored to the reducing-agent adding execution flag storing region, that is, when "0" is stored to the reducing-agent adding execution flag storing region, the CPU 351 regards that the flow-regulating valve 30 is brought into the valve closing state and proceeds to S603.

In S603, the CPU 351 closes the shut-off valve 31 and the reducing-agent supplying passage 29 from the shut-off valve 31 to the flow-regulating valve 30 constitutes the closed space.

At S604, the CPU 351 inputs the output signal value of the reducing-agent pressure sensor 32 (adding fuel pressure of the closed space): P1 and stores the adding fuel pressure: P1 to RAM 353.

At S605, the CPU 351 makes access to a counter storing region set to a predetermined region of RAM 353 and increments counter value: C stored to the counter storing region by 1. The counter storing region is a region for storing an elapse period from a time point of inputting the adding fuel pressure: P1.

At S606, the CPU 351 determines whether the counter value: C updated in S605 is equal to or larger than a predetermined period: Cb, in other words, the elapse period from the time point of inputting the adding fuel pressure: P1 is equal to or larger than the predetermined period: Cb.

At S606, when it is determined that the counter value: C is less than the predetermined period:Cb, the CPU 351 repeatedly executes the above-described processing at S605 and thereafter until the counter value: C reaches the predetermined period: Cb or more.

At S606, when it is determined that the counter value: C is equal to or larger than the predetermined period: Cb, that is, when it is determined that the elapse period from the time point of inputting the adding fuel pressure: P1 reaches the predetermined period: Cb or more, the CPU 351 proceeds to S607 and inputs again an output signal value (adding fuel pressure in the closed space) : P2 of the reducing-agent pressure sensor 32 at the time point.

At S608, the CPU 351 reads the adding fuel pressure: P1 detected at S604 from RAM 353. The CPU 351 calculates an absolute value of a difference between the adding fuel pressure: P1 and the adding fuel pressure: P2 inputted at S607 and determines whether the calculated absolute value (lP1-P2l) is equal to or larger than a predetermined change amount: ΔP.

Further, the change amount: ΔP is a value by adding a value previously calculating experimentally a change amount of the adding fuel pressure when leakage of the reducing-agent is not caused in the reducing-agent supplying mechanism, and a margin in consideration of an external factor such as outside temperature or temperature of fuel. The change amount: ΔP may previously be stored to the predetermined region of ROM 352.

At S608, when it is determined that the absolute value (|P1-P2|) of the difference between the adding fuel pressure: P1 and the adding fuel pressure: P2, is less than the change amount: ΔP, the CPU 351 regards that leakage of fuel is not caused in the reducing-agent supplying mechanism and proceeds to S612.

At S612, the CPU 351 resets the reducing-agent leakage flag storing region of RAM 353 to "0". The CPU 351 which has finished executing the processing of S612, resets the counter value: C of the counter storing region to "0" at S611 and thereafter finishes executing the routine.

Meanwhile, at S608, when it is determined that the absolute value (IP1-P21) of the difference between the adding fuel pressure: P1 and the adding fuel pressure P2 is equal to or larger than the change amount: ΔP, the CPU 351 regards that leakage of fuel is caused in the reducing-agent supplying mechanism and proceeds to S609.

At S609, the CPU 351 sets "1" into the reducing-agent leakage flag storing region of RAM 353.

At S610, the CPU 351 lights a warning lamp (not shown diagrammatically) provided in the vehicular compartment.

At S611, the CPU 351 resets the counter value: C of the counter storing region to "0". When the CPU 351 finishes executing the processing at S611, execution of the routine is finished.

According to the above-described embodiment, the closed space is formed in the reducing-agent adding mechanism, leakage of the reducing-agent is determined on the basis of the change in pressure during the predetermined period of the closed space and therefore, leakage of a comparatively small amount of the reducing-agent can be detected.

### (Embodiment 2)

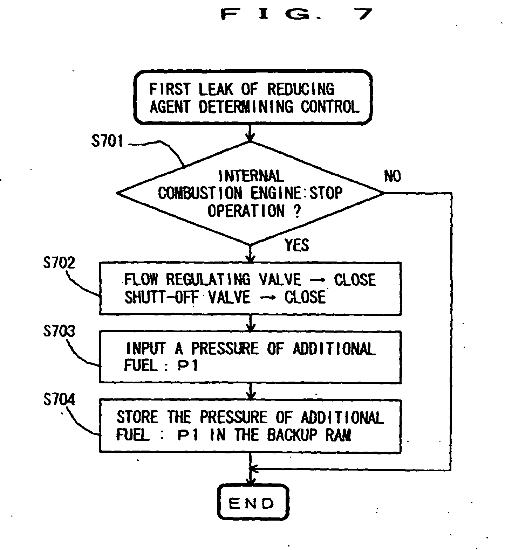

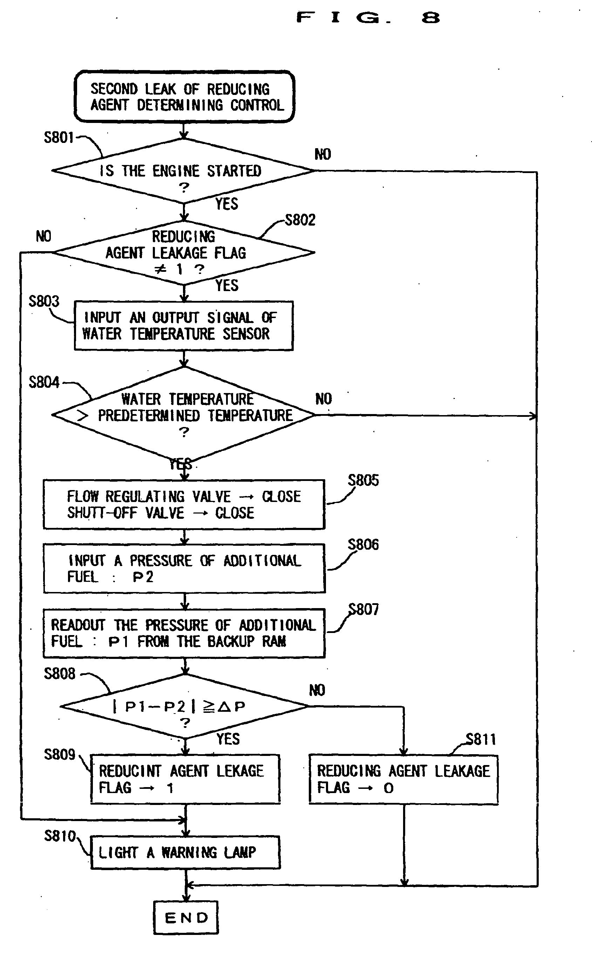

Next, an explanation will be given of a second embodiment of an abnormality detecting apparatus of the reducing-agent supplying apparatus according to the present invention in reference to Fig. 7 and Fig. 8. An explanation will be given here of a constitution different from that of the above-described first embodiment and an explanation will be omitted with regard to similar constitution.

According to the above-described first embodiment, a description has been given of the example in which the closed space is formed in the reducing-agent adding mechanism and leakage of the reducing-agent is determined on the basis of the change of pressure during the predetermined period of the closed space, and the longer the predetermined period (determining period) in that case, the more easily the very small change of the pressure is detected and therefore, when detecting leakage of the reducing-agent of an extremely small amount, it is preferable to prolong the determining period.

However, when the leak of reducing-agent determining control is executed, the flow-regulating valve 30 and the shut-off valve 31 are maintained in the valve closing state, the control of adding the reducing-agent cannot be executed and therefore, when the determining period of determining leakage of the reducing-agent is prolonged, a period of prohibiting to execute the reducing-agent adding control is prolonged and there is a possibility of causing deterioration of exhaust emission.

Hence, according to the leak of reducing-agent determining control of the second embodiment, the CPU 351 maintains the flow-regulating valve 30 and the shut-off valve 31 in the valve closing state during a period from when the internal combustion engine 1 stops operating until the internal combustion engine 1 is started again and determines leakage of the reducing-agent on the basis of a change in the adding fuel pressure during the period.

An explanation will be given as follows of the leak of reducing-agent determining control according to the embodiment in reference to flowcharts of Fig. 7 and Fig. 8.

The flowchart shown in Fig. 7 is a flowchart showing a first leak of reducing-agent determining control routine and the first leak of reducing-agent determining control routine is a routine repeatedly executed at every predetermined period (for example, every time of outputting a predetermined number of pulse signals by the crank position sensor 33) by the CPU 351.

Meanwhile, the flowchart shown by Fig. 8 is a flowchart showing a second leak of reducing-agent determining control routine and the second leak of reducing-agent determining control routine is a routine executed by the CPU 351 in starting the internal combustion engine 1, specifically, by switching an ignition switch (not shown diagrammatically) from OFF to ON as a trigger.

First, according to the first leak of reducing-agent determining control routine, at S701, the CPU 351 determines whether operation of the internal combustion engine 1 is stopped. As a method of determining stoppage of operation of the internal combustion engine 1, there can be exemplified a method of determining stoppage of operation of the internal combustion engine 1 by a condition of switching an ignition switch (not shown diagrammatically) from ON to OFF, or a method of determining stoppage of operation of the internal combustion engine 1 by a condition that the engine revolution speed is lowered to less than a predetermined revolution speed.

At S701, when operation of the internal combustion engine 1 is not stopped, in other words, when it is determined that the internal combustion engine 1 is brought into an operating state, the CPU 351 temporarily finishes executing outputting.

Meanwhile, at S701, when it is determined that operation of the internal combustion engine 1 is stopped, the CPU 351 proceeds to S702, closes both of the flow-regulating valve 30 and the shut-off valve 31 and constitutes the closed space by the passage from the flow-regulating valve 30 to the shut-off. valve 31.

At S703, the CPU 351 inputs the output signal value of the reducing-agent pressure sensor 32 (adding fuel pressure immediately after stopping to operate the engine): P1.

At S704, the CPU 351 stores the adding fuel pressure: P1 inputted at S703 to a predetermined region of the backup RAM 354. The CPU 351 which has finished executing the processing of S704, finishes executing the routine.

Next, in the second leak of reducing-agent determining control routine, first, at S801, the CPU 351 determines whether the internal combustion engine 1 is brought into a starting state or a engine-start completed state. As a method of determining the starting state of the internal combustion engine 1, there can be exemplified a method of determining that the internal combustion engine 1 is brought into the starting state by a condition that a starter switch (not shown diagrammatically), is switched from OFF to ON. Further, as a method of determining the starting finished state of the interval combustion engine 1, there can be exemplified a method of determining that the internal combustion engine 1 is brought into the starting finished state by a condition that the engine revolution speed becomes equal toor larger than a predetermined revolution speed.

At S801, when it is determined that the internal combustion engine 1 is not brought into the starting state or the starting finished state, that is, when it is determined that the internal combustion engine 1 is brought into an operation stop state, the CPU 351 finishes executing the routine.

Meanwhile, at S801, when it is determined that the internal combustion engine 1 is brought into the starting state or the starting finished state, the CPU 351 proceeds to S802, makes access to the reducing-agent leakage flag storing region of RAM 353 and determines whether "1" is stored thereto.

At S802, when it is determined that "1" has already been stored to the reducing-agent leakage flag storing region, the CPU 351 proceeds to S810, lights a warning lamp provided in the vehicular compartment and expedites the driver of the vehicle to repair the reducing-agent supplying mechanism.

Meanwhile, at S802, when it is determined that "1" is not stored to the reducing-agent leakage flag storing region, the CPU 351 proceeds to S803 and inputs the output signal value of the water temperature sensor 34 (cooling water temperature).

At S804, the CPU 351 determines whether the cooling water temperature inputted at S803 is equal to or higher than predetermined temperature.

At S804, when it is determined that the cooling water temperature is lower than the predetermined temperature, the CPU 351 regards that an excessive period has elapsed from when operation of the internal combustion engine 1 has been stopped until the internal combustion engine 1 is started again and finishes executing the routine.

This is because when the elapse period from when the operation of the internal combustion engine 1 has been stopped until the internal combustion engine 1 is started again, is excessively prolonged, even in the case in which leakage of the reducing-agent is not caused in the closed space, there is a possibility of significantly changing the adding fuel pressure in the closed space by an external factor such as outside temperature, temperature in an engine room of the vehicle or fuel temperature and when determination of leakage of the reducing-agent is executed under such a situation, erroneous determinations results.

Further, as a parameter of predicting the elapse period from when operation of the internal combustion engine 1 has been stopped until the internal combustion engine 1 is started again, in place of the cooling water temperature, temperature of lubricant of the internal combustion engine 1 (oil temperature) may be used or both of the cooling water temperature and the oil temperature may be used.

Meanwhile, at S804, when it is determined that the cooling water temperature is equal to or higher than the predetermined temperature, the CPU 351 regards that excessive period has not been elapsed from when operation of the internal combustion engine 1 has been stopped until the internal combustion engine 1 is started again and proceeds to S805.

At S805, the CPU 351 maintains the valve closing state of the flow-regulating valve 30 and the shut-off valve 31 to thereby maintain the reducing-agent supplying passage 29 from the shut-off valve 31 to the flow-regulating valve 30 in the closed space.

At S806, the CPU 351 inputs the output signal value of the reducing-agent pressure sensor 32 (adding fuel pressure of the closed space): P2.

At S807, the CPU 351 reads the adding fuel pressure : P1 detected immediately after stopping to operate the internal combustion engine 1 from a predetermined region of the backup RAM 354.

At S808, the CPU 351 calculates an absolute value of a difference between the adding fuel pressure detected at S806: P2 and the adding fuel pressure: P1 read at S807 and determines whether the calculated absolute value (|P1-P2|) is equal to or larger than the predetermined change amount: ΔP.

Further, the above-described change amount: ΔP is a value provided by adding a value of previously calculating experimentally the change amount of the adding fuel pressure when leakage of the reducing-agent is not caused in the reducing-agent supplying mechanism and a margin in consideration of an external factor such as outside temperature or temperature of fuel.

At S808, when it is determined that the absolute value (|P1-P2|) of the difference between the adding fuel pressure: P1 and the adding fuel pressure: P2 is lower than the change amount: ΔP, the CPU 351 regards that leakage of fuel is not caused in the reducing-agent supplying mechanism and proceeds to 5811.

At S811, the CPU 351 resets the reducing-agent leakage flag storing region of RAM 353 to "0". The CPU 351 which has finished executing the processing of S811, finishes executing the routine.

Meanwhile, at S808, when it is determined that the absolute value (|P1-P2|) of the difference between the adding fuel pressure: P1 and the adding fuel pressure: P2 is equal to or larger than the change amount: ΔP, the CPU 351 regards that leakage of fuel is caused in the reducing-agent supplying mechanism and proceeds to S809.

At S809, the CPU 351 sets "1" into the reducing-agent leakage flag storing region of RAM 353.

At S810, the CPU 351 lights a warning lamp (not shown diagrammatically) provided at the vehicular chamber. The CPU 351 which has finished executing the processing of S810, finishes executing the routine.

According to the above-described embodiment, during a comparatively long period from when operation of the internal combustion engine 1 has been stopped until the internal combustion engine 1 is started again, the closed space is formed in the reducing-agent adding mechanism, leakage of the reducing-agent is determined on the basis of the change of pressure in the closed space and therefore, leakage of an extremely small amount of the reducing-agent can be detected.

According to the reducing-agent supplying apparatus of the present invention, leakage of the reducing-agent can be detected on the basis of pressure of the reducing-agent in the reducing-agent supplying mechanism and therefore, leakage of the reducing-agent can be reflected to the control of adding the reducing-agent, which can contribute to restraining deterioration of exhaust emission or preventing destruction of exhaust gas purifying catalyst, which is caused by excessive supply or supply deficiency of the reducing-agent with respect to the exhaust gas purifying catalyst.

Further, when the abnormality detecting apparatus of the reducing-agent supplying apparatus according to the present invention is provided with a shut-off unit shutting off flow of the reducing-agent from a reducing-agent discharging unit to a reducing-agent supplying passage, the closed space is constituted by the passage from the shut-off unit to the reducing-agent adding unit in the reducing-agent supplying mechanism, leakage of the reducing-agent can be determined on the basis of the change in the pressure of the closed space and therefore, leakage of a comparatively small amount of the reducing-agent can be detected.

## Claims

1. An exhaust gas purifying apparatus of an internal combustion engine, comprising:
an exhaust gas purifying catalyst (20) provided at an exhaust passage (18, 19) of the internal combustion engine (1) for purifying harmful gas components in exhaust gas when a reducing-agent has place;
a reducing-agent supplying mechanism for supplying the reducing-agent to a more upstream point than the exhaust gas purifying catalyst (20) on the exhaust passage (18, 19), the reducing-agent supplying mechanism comprising: a reducing-agent adding unit (28) provided at a more upstream portion than the exhaust gas purifying catalyst (20) on the exhaust passage (18, 19) for adding the reducing-agent into the exhaust gas flowing in the exhaust passage (18, 19), a reducing-agent supplying passage (29) for conducting the reducing-agent to the reducing-agent adding unit (28), and a reducing-agent discharging unit (6) for discharging the reducing-agent to the reducing-agent supplying passage (29) at a predetermined pressure;
a shut-off valve (31) for shutting off flow of the reducing-agent from the reducing-agent discharging unit (6) to the reducing-agent supplying passage (29);
pressure detecting means (32) for detecting a pressure of the reducing-agent in the reducing-agent supplying passage (29) at a more downstream point than the shut-off valve (31) in the reducing-agent supplying passage (29); and
abnormality determining means (35) for determining an abnormality,
**characterized in that**
the abnormality determining means (35) determines an abnormality of the reducing-agent supplying mechanism on the basis of the pressure detected by the pressure detecting means (32) when the shut-off valve (31) shuts off the flow of the reducing-agent in the reducing-agent supplying passage (29).

2. The exhaust gas purifying apparatus of an internal combustion engine according to claim 1, wherein the abnormality determining means (35) determines that the reducing-agent supplying mechanism is abnormal when the pressure detected by the pressure detecting means (32) is deviated from a predetermined range.

3. The exhaust gas purifying apparatus of an internal combustion engine (1) according to claim 2, wherein said abnormality determining means (351) determines that the reducing-agent supplying mechanism (6, 25-32) is abnormal when the pressure detected by the pressure detecting means (32) is below a predetermined lower limit value.

4. The exhaust gas purifying apparatus of an internal combustion engine (1) according to any one of claims 1-3, wherein said abnormality determining means (351) determines that the reducing-agent supplying mechanism (6, 25-32) is abnormal in a case in which an amount of change of pressure detected by the pressure detecting means (32) exceeds a predetermined amount when the shut-off unit (31) shuts off the flow of the reducing-agent from the reducing-agent discharging unit (6) to the reducing-agent supplying passage (29).

5. The exhaust gas purifying apparatus of an internal combustion engine (1) according to claim 4, wherein said the abnormality determining means (351) determines that the reducing-agent supplying mechanism (6, 25-32) is abnormal in a case in which a deviation between the pressure detected by the pressure detecting means (32) when operation of the internal combustion engine (1) is stopped and the pressure detected by the pressure detecting means (32) when the internal combustion engine (1) is started again, exceeds a predetermined amount.

6. The exhaust gas purifying apparatus of an internal combustion engine (1) according to claim 5, wherein said abnormality determining means (351) prohibits to determine the abnormality of the reducing-agent supplying mechanism (6, 25-32), when an elapse period from a time point that the operation of the internal combustion engine (1) has been stopped until a time point that the internal combustion engine (1) is restarted, is equal to or larger than a predetermined period.

## Patentansprüche

1. Abgasreinigungsvorrichtung für eine Brennkraftmaschine, mit:
einem Abgasreinigungskatalysator (20), der am Auspuffkanal (18, 19) der Brennkraftmaschine (1) vorgesehen ist, um schädliche Gasbestandteile im Abgas zu reinigen, wenn ein Reduktionsmittel vorhanden ist;
einem Reduktionsmittelzuführungsmechanismus zum Zuführen des Reduktionsmittels zu einem Punkt weiter stromaufwärts auf dem Auspuffkanal (18, 19) als der Abgasreinigungskatalysator (20), wobei der Reduktionsmittelzuführungsmechanismus Folgendes umfasst: eine Reduktionsmittelbeimengungseinheit (28), die sich an einem Abschnitt weiter stromaufwärts auf dem Auspuffkanal (18, 19) als der Abgasreinigungskatalysator (20) befindet, um das Reduktionsmittel in das Abgas einzumengen, das im Auspuffkanal (18, 19) strömt, einen Reduktionsmittelzuführungskanal (29), um das Reduktionsmittel zur Reduktionsmittelbeimengungseinheit (28) zu leiten, und eine Reduktionsmittelablasseinheit (6), um das Reduktionsmittel unter einem vorbestimmten Druck zum Reduktionsmittelzuführungskanal (29) abzulassen;
einem Absperrventil (31) zum Absperren des Reduktionsmittelstroms von der Reduktionsmittelablasseinheit (6) zum Reduktionsmittelzuführungskanal (29);
einer Druckerfassungseinrichtung (32) zum Erfassen eines Drucks des Reduktionsmittels im Reduktionsmittelzuführungskanal (29) an einem Punkt weiter stromabwärts im Reduktionsmittelzuführungskanal (29) als das Absperrventil (31); und
einer Anomaliefeststellungseinrichtung (35) zum Festellen einer Anomalie,
**dadurch gekennzeichnet, dass**
die Anomaliefeststellungseinrichtung (35) auf Grundlage des von der Druckerfassungseinrichtung (32) erfassten Drucks eine Anomalie des Reduktionsmittelzuführungsmechanismus feststellt, wenn das Absperrventil (31) den Strom des Reduktionsmittels im Reduktionsmittelzuführungskanal (29) absperrt.

2. Abgasreinigungsvorrichtung einer Brennkraftmaschine nach Anspruch 1, bei der die Anomaliefeststellungseinrichtung (35) feststellt, dass der Reduktionsmittelzuführungsmechanismus anomal ist, wenn der von der Druckerfassungseinrichtung (32) erfasste Druck von einem vorbestimmten Bereich abweicht.

3. Abgasreinigungsvorrichtung einer Brennkraftmaschine (1) nach Anspruch 2, bei der die Anomaliefeststellungseinrichtung (351) feststellt, dass der Reduktionsmittelzuführungsmechanismus (6, 25-32) anomal ist, wenn der von der Druckerfassungseinrichtung (32) erfasste Druck unterhalb eines vorbestimmten unteren Grenzwerts liegt.

4. Abgasreinigungsvorrichtung einer Brennkraftmaschine (1) nach einem der Ansprüche 1-3, bei der die Anomaliefeststellungseinrichtung (351) feststellt, dass der Reduktionsmittelzuführungsmechanismus (6, 25-32) anomal ist, falls ein von der Druckerfassungseinrichtung (32) erfasster Druckänderungsbetrag über einen vorbestimmten Betrag hinausgeht, wenn die Absperreinheit (31) den Reduktionsmittelstrom von der Reduktionsmittelablasseinheit (6) zum Reduktionsmittelzuführungskanal (29) absperrt.

5. Abgasreinigungsvorrichtung einer Brennkraftmaschine (1) nach Anspruch 4, bei der die Anomaliefeststellungseinrichtung (351) feststellt, dass der Reduktionsmittelzuführungsmechanismus (6, 25-32) anomal ist, falls eine Abweichung zwischen dem Druck, der von der Druckerfassungseinrichtung (32) erfasst wird, wenn der Betrieb der Brennkraftmaschine (1) eingestellt wird, und dem Druck, der von der Druckerfassungseinrichtung (32) erfasst wird, wenn die Brennkraftmaschine (1) erneut gestartet wird, über einen vorbestimmten Betrag hinausgeht.

6. Abgasreinigungsvorrichtung einer Brennkraftmaschine (1) nach Anspruch 5, bei der die Anomaliefeststellungseinrichtung (351) verhindert, dass die Anomalie des Reduktionsmittelzuführungsmechanismus (6, 25-32) festgestellt wird, wenn eine abgelaufene Zeitdauer von einem Zeitpunkt, zu dem der Betrieb der Brennkraftmaschine (1) eingestellt worden ist, bis zu einem Zeitpunkt, zu dem die Brennkraftmaschine (1) neu gestartet worden ist, größer oder gleich einer vorbestimmten Zeitdauer ist.

## Revendications

1. Dispositif de purification de gaz d'échappement d'un moteur à combustion interne, comprenant:
un catalyseur de purification de gaz d'échappement (20) fourni au niveau d'un passage d'échappement (18, 19) du moteur à combustion interne (1) pour purifier des composants de gaz nocifs du gaz d'échappement lorsque un agent réducteur s'y trouve;
un mécanisme d'alimentation d'agent réducteur pour alimenter l'agent réducteur à un point plus en amont que le catalyseur de purification de gaz d'échappement (20) sur le passage d'échappement (18, 19), le mécanisme d'alimentation d'agent réducteur comprenant: une unité d'ajout d'agent réducteur (28) fournie dans une partie plus en amont que le catalyseur de purification de gaz d'échappement (20) sur le passage d'échappement (18, 19) pour ajouter l'agent réducteur dans le gaz d'échappement s'écoulant dans le passage d'échappement (18, 19), un passage d'alimentation d'agent réducteur (29) pour conduire l'agent réducteur à l'unité d'ajout d'agent réducteur (28), et une unité de déchargement d'agent réducteur (6) pour décharger l'agent réducteur au passage d'alimentation d'agent réducteur (29) à une pression prédéterminée;
une soupape d'arrêt (31) pour arrêter un écoulement de l'agent réducteur depuis l'unité de déchargement d'agent réducteur (6) au passage d'alimentation d'agent réducteur (29);
un moyen de détection de pression (32) pour détecter une pression de l'agent réducteur dans le passage d'alimentation d'agent réducteur (29) à un point plus en aval que la soupape d'arrêt (31) dans le passage d'alimentation d'agent réducteur (29); et
un moyen de détermination d'anomalie (35) pour déterminer une anomalie;
**caractérisé en ce que**
le moyen de détermination d'anomalie (35) détermine une anomalie du mécanisme d'alimentation d'agent réducteur sur la base de la pression détectée par le moyen de détection de pression (32) lorsque la soupape d'arrêt (31) arrête l'écoulement de l'agent réducteur dans le passage d'alimentation d'agent réducteur (29).

2. Dispositif de purification de gaz d'échappement d'un moteur à combustion interne selon la revendication 1, dans lequel le moyen de détermination d'anomalie (35) détermine que le mécanisme d'alimentation d'agent réducteur est anormal lorsque la pression détectée par le moyen de détection de pression (32) est déviée d'une plage prédéterminée.

3. Dispositif de purification de gaz d'échappement d'un moteur à combustion interne (1) selon la revendication 2, dans lequel ledit moyen de détermination d'anomalie (351) détermine que le mécanisme d'alimentation d'agent réducteur (6, 25-32) est anormal lorsque la pression détectée par le moyen de détection de pression (32) est en dessous d'une valeur limite inférieure prédéterminée.

4. Dispositif de purification de gaz d'échappement d'un moteur à combustion interne (1) selon l'une quelconque des revendications 1-3, dans lequel ledit moyen de détermination d'anomalie (351) détermine que le mécanisme d'alimentation d'agent réducteur (6, 25-32) est anormal dans un cas dans lequel une quantité de changement de pression détectée par le moyen de détection de pression (32) excède une quantité prédéterminée lorsque l'unité d'arrêt (31) arrête l'écoulement de l'agent réducteur depuis l'unité de déchargement d'agent réducteur (6) au passage d'alimentation d'agent réducteur (29).

5. Dispositif de purification de gaz d'échappement d'un moteur à combustion interne (1) selon la revendication 4, dans lequel ledit moyen de détermination d'anomalie (351) détermine que le mécanisme d'alimentation d'agent réducteur (6, 25-32) est anormal dans un cas dans lequel une déviation entre la pression détectée par le moyen de détection de pression (32) lorsque le fonctionnement du moteur à combustion interne (1) est arrêté et la pression détectée par le moyen de détection de pression (32) lorsque le moteur à combustion interne (1) est démarré à nouveau, excède une quantité prédéterminée.

6. Dispositif de purification de gaz d'échappement d'un moteur à combustion interne (1) selon la revendication 5, dans lequel ledit moyen de détermination d'anomalie (351) interdit de déterminer l'anomalie du mécanisme d'alimentation d'agent réducteur (6, 25-32), lorsqu'une période écoulée depuis un point de temps où le fonctionnement du moteur à combustion interne (1) a été arrêté jusqu'à un point de temps où le moteur à combustion interne (1) est redémarré, est égale à ou plus grande qu'une période prédéterminée.
